Europäisches Patentamt

European Patent Office

Office européen des brevets

(11) Veröffentlichungsnummer: **0 292 714 B1**

(12) **EUROPÄISCHE PATENTSCHRIFT**

(45) Veröffentlichungstag der Patentschrift: **30.06.93**

(21) Anmeldenummer: **88106697.1**

(22) Anmeldetag: **27.04.88**

(51) Int. Cl.5: **C08L 71/12**, C08L 25/08

(54) Thermoplastische Formmassen auf Basis von Polyphenylenether.

(30) Priorität: **02.05.87 DE 3714710**

(43) Veröffentlichungstag der Anmeldung:
**30.11.88 Patentblatt 88/48**

(45) Bekanntmachung des Hinweises auf die
Patenterteilung:
**30.06.93 Patentblatt 93/26**

(84) Benannte Vertragsstaaten:
**BE DE FR GB NL**

(56) Entgegenhaltungen:
**DE-A- 2 613 941**
**DE-A- 2 750 515**

(73) Patentinhaber: **BASF Aktiengesellschaft**
**Carl-Bosch-Strasse 38**
**W-6700 Ludwigshafen(DE)**

(72) Erfinder: **Ostermayer, Bertram, Dr.**
**Pfaffenpfad 14**
**W-6701 Roedersheim-Gronau(DE)**
Erfinder: **Seiler, Erhard, Dr.**
**Erpolzheimer Strasse 1**
**W-6700 Ludwigshafen(DE)**
Erfinder: **Wagner, Daniel, Dr.**
**Prof.-Dillinger-Weg 44**
**W-6702 Bad Duerkheim(DE)**
Erfinder: **Bronstert, Klaus, Dr.**
**Gartenstrasse 26**
**W-6719 Carlsberg(DE)**
Erfinder: **Ladenberger, Volker, Dr.**
**Verschaffeltstrasse 34**
**W-6830 Schwetzingen(DE)**

**Beschreibung**

Die Erfindung betrifft thermoplastische Formmassen, enthaltend
a) 20 bis 80 Gew.-Teile eines Polyphenylenethers,
b) 1 bis 20 Gew.-Teile eines Blockcopolymerisates der allgemeinen Formel A-B-A' aus zwei polyvinylaromatischen Blöcken A und A' und einem teilhydrierten Kautschukblock B,
c) 0 bis 70 Gew.-Teile eines Polyvinylaromaten und
d) 0 bis 40 Gew.-Teile üblicher Zusätze,
wobei die Summe aus a) bis d) 100 Gew.-Teile ergibt.

Thermoplastische Massen, die sich zur Herstellung von Formteilen eignen und die schlagzäh modifizierte Styrolpolymerisate und Polyphenylenether enthalten, sind z.B. aus den US-Patentschriften 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß bei hoher Zähigkeit die Massen ein nicht ausreichendes Fließverhalten und bei gutem Fließverhalten eine nicht befriedigende Zähigkeit haben. Zur weiteren Erhöhung der Zähigkeit ist deshalb in einer Reihe von Literaturstellen, z.B. in der DE-A 20 00 118, 22 55 930, der DE-B 24 34 848, der DE-A 27 51 329, 30 38 551 und 30 43 893 der Zusatz von hydrierten Blockcopolymerisatkautschuken unterschiedlicher Zusammensetzung zu Polyphenylenethern und gegebenenfalls Styrolpolymerisaten empfohlen worden.

Insbesondere waren aus der DE-B 24 34 848 thermoplastische Formmassen aus Polyphenylenether und einem Styrolpolymerisat bekannt, die durch ein Blockcopolymerisat des Typs A-B-A mit symmetrischem Aufbau schlagzäh modifiziert sind. Die Blöcke A aus polymerisiertem Styrol haben ein mittleres Molekulargewicht von 4000 bis 115 000 und machen gemeinsam bis zu 33 Gew.-% des Blockcopolymerisates aus. Der teilhydrierte Block B aus polymerisiertem Butadien hat ein mittleres Molekulargewicht von 20 000 bis 450 000 und enthält weniger als 10 Gew.-% der ursprünglich vorhandenen Doppelbindungen. Diese Formmassen weisen jedoch einige Nachteile auf. Sie lassen sich aufgrund ihrer unbefriedigenden Fließfähigkeit, insbesondere bei hohen Polyphenylenetheranteilen, schwer verarbeiten und weisen darüber hinaus eine nicht befriedigende Schlagzähigkeit auf, die außerdem bei längerer Temperaturbelastung stark absinkt.

Aufgabe der vorliegenden Erfindung war es daher, hochzähe und gleichzeitig leicht fließende Formmassen auf Basis von Polyphenylenether bereitzustellen, die gut verarbeitbar sind und eine hohe Wärmestabilität aufweisen.

Demgemäß wurden thermoplastische Formmassen, enthaltend
a) 20 bis 80 Gew.-Teile eines Polyphenylenethers,
b) 1 bis 20 Gew.-Teile eines Blockcopolymeren der allgemeinen Formel A-B-A' aus zwei polyvinylaromatischen Blöcken A und A' und einem teilhydrierten Kautschukblock B,
c) 0 bis 70 Gew.-Teile eines Polyvinylaromaten und
d) 0 bis 40 Gew.-Teile üblicher Zusätze,
wobei die Summe aus a) bis d) 100 Gew.-Teile ergibt, die dadurch gekennzeichnet sind, daß
- die mittleren Molekulargewichte von A und A' sich um den Faktor 2 bis 20 unterscheiden,
- der kürzere Block A ein mittleres Molekulargewicht von 2000 bis 4000 aufweist und
- die Blöcke A und A' gemeinsam 35 bis 50 Gew.-% von b) ausmachen,
- im Block B des Blockcopolymerisates b 10 bis 20 Gew.-% der ursprünglich vorliegenden Doppelbindungen vorhanden sind,
gefunden.

Außerdem wurden spezielle Ausführungsformen der Formmassen gemäß der Unteransprüche, ein Verfahren zu ihrer Herstellung und ihre Verwendung zur Herstellung von schlagzähen Formkörpern gefunden.

Im folgenden werden die Formmassen im einzelnen beschrieben.

Komponente a

Die Komponente a ist in den erfindungsgemäßen Formmassen zu 20 bis 80, bevorzugt 30 bis 70, insbesondere 35 bis 60 Gew.-Teilen, bezogen auf die Summe der Komponenten a) bis d) vorhanden.

Es handelt sich um Verbindungen auf der Basis von in ortho-Position disubstituierten Polyphenylenoxiden, wobei der Ethersauerstoff der einen Einheit an den Benzolkern der benachbarten Einheit gebunden ist. Die Polyether können in ortho-Stellung zum Sauerstoff Wasserstoff, Halogen, Kohlenwasserstoffe, die kein α-ständiges tertiäres Wasserstoffatom besitzen, Halogenkohlenwasserstoffe, Phenylreste und Kohlenwasserstoffoxireste tragen. So kommen in Frage:
Poly(2,6-dichlor-1,4-phenylen)ether, Poly(2,6-diphenyl-1,4-phenylen)ether,
Poly(2,6-di-methoxy-1,4-phenylen)ether,
Poly(2,6-dimethyl-1,4-phenylen)ether,
Poly(2,6-dimethyl-co-2,3,6-trimethyl-1,4-phenylen)ether,
Poly(2,6-dibrom-1,4-phenylen)ether.

Bevorzugterweise werden Poly(2,6-dimethyl-1,4-phenylen)ether und Poly(2,6-dimethyl-co-2,3,6-trimethyl-1,4-phenylen)ether eingesetzt. Ganz besonders bevorzugt werden Poly(2,6-dimethyl-1,4-phenylen)-ether. Die Viskositätszahl der verwendeten Polyether liegt im allgemeinen zwischen 0,4 und 0,8, vorzugsweise 0,5 und 0,7 dl/g, gemessen in Chloroform bei 30°C nach DIN 53 726.

Die aromatischen Polyether können durch Selbstkondensation der entsprechenden einwertigen Phenole durch Einwirken von Sauerstoff in Gegenwart eines Katalysatorsystems, wie es beispielsweise in den US-Patentschriften 3 219 625, 3 306 875, 3 956 442, 3 965 oder 3 972 851 beschrieben ist, hergestellt werden.

Komponente b

Das Blockcopolymere b wird in den erfindungsgemäßen Formmassen zu 1 bis 20, bevorzugt 7 bis 25, insbesondere 7 bis 15 Gew.-Teilen, bezogen auf die Summe von a) bis d), eingesetzt. Unter Blockcopolymeren werden bekanntlich solche Copolymere verstanden, bei denen die unterschiedlichen Monomeren nicht statistisch in der Kette eingebaut sind, sondern in denen homopolymere Kettenabschnitte (Polymerblöcke) der verschiedenen Monomeren miteinander verknüpft sind. Bei Blockcopolymeren mit unsymmetrischem Aufbau der allgemeinen Formel A-B-A' sind die unterschiedlichen homopolymeren Kettenabschnitte A und A' der gleichen Monomeren mit dem homopolymeren Kettenabschnitt B eines anderen Monomeren verbunden. Blockcopoylmere mit unsymmetrischem Aufbau sind an sich bekannt, z.B. aus der EP-A 26 916 oder dem US-Patent 4 091 053.

Die Blockcopolymeren b bestehen aus 35 bis 50, bevorzugt 35 bis 40 Gew.-% mindestens eines vinylaromatischen Kohlenwasserstoffs, der die Blöcke A und A' bildet, und 50 bis 65, bevorzugt 60 bis 65 Gew.-% eines oder mehrerer Monomerer, die den Kautschukblock bilden. Das Gewichtsverhältnis der Monomeren im Blockcopolymeren kann nach üblichen Methoden bestimmt werden, z.B. durch oxidativen Abbau der unhydrierten Blockcopolymeren mit Osmiumtetroxid und gravimetrischer Analyse, IR-spektroskopisch oder über eine Bestimmung des Brechungsindex.

Das mittlere Molekulargewicht des Blockcopolymeren, worunter in Rahmen dieser Erfindung das Zahlenmittel des Molekulargewichtes verstanden wird, kann zwischen 12 000 und 240 000, bevorzugt 38 000 und 100 000 g/Mol liegen. Es wird, wie unten beschrieben, durch Gelpermeationschromatographie bestimmt.

Erfindungsgemäß unterscheiden sich die mittleren Molekulargewichte der Blöcke A und A' um den Faktor 2 bis 20, bevorzugt 4 bis 8. Der kürzere Block A besitzt ein mittleres Molekulargewicht von 2000 bis 4000, bevorzugt 3000 bis 3800 g/mol. Die mittleren Molekulargewichte der Polymerblöcke A und A' können in bekannter Weise bestimmt werden durch oxidativen Abbau der unhydrierten Blockcopolymeren A-B-A' mit Osmiumtetroxid und Auswertung der Gelpermeationschromatogramme.

Das mittlere Molekulargewicht des Blockes B ist in weiten Bereichen unkritisch. Es hat sich jedoch als vorteilhaft herausgestellt, wenn B ein höheres Molekulargewicht als der längere Block A' aufweist. Das mittlere Molekulargewicht des Polymerblockes B ist beispielsweise durch Differenzbildung der Molekulargewichte von A und A' zum mittleren Molekulargewicht des Blockcopolymeren A-B-A' erhältlich.

Die Polymerblöcke A und A' können aus vinylaromatischen Kohlenwasserstoffen, wie z.B. Styrol, α-Methylstyrol und kernalkylierten Styrolen bestehen, wobei Styrol bevorzugt ist. Konjugierte Diene, die für den Elastomerblock B insbesondere in Betracht kommen, sind Butadien, Isopren, 2,3,-Dimethylbutadien, Piperylen, oder andere anionisch polymerisierbare konjugierte $C_4$- bis $C_{12}$-Diene, wobei 1,3-Butadien und Isopren bevorzugt sind. Werden solche konjugierten Diene verwendet, so hat es sich als vorteilhaft erwiesen, wenn 35 bis 55 Gew.-% dieser Monomeren in 1,2-Konfiguration polymerisiert sind.

Die Herstellung der Blockcopolymeren b kann nach bekannten Methoden der anionischen Blockpolymerisation durch sequentielle Addition der Monomeren oder Kopplungstechniken erfolgen. Derartige Verfahren werden z.B. in den US-Patentschriften 3 251 905, 3 390 207, 3 598 887 und 4 219 627 ausführlich beschrieben. Als Initiatoren für die Polymerisation eignen sich alkalimetallorganische Verbindungen, vorzugsweise Lithiumalkyle wie z.B. Methyllithium, Ethyllithium, n-, s-Butyllithium oder Isopropyllithium. Besonders bevorzugt wird n- oder s-Butyllithium eingesetzt. Als Lösungsmittel für die Polymerisation eignen sich zweckmäßig geradkettige oder verzweigte alphatische Kohlenwasserstoffe, wie z.B. n-Octan oder n-Hexan, sowie einfache oder substituierte cycloaliphatische und aromatische Kohlenwasserstoffe wie z.B. Cyclohexan, Methylcyclohexan oder Toluol sowie jede beliebige Mischung der aliphatischen, cycloaliphatischen und aromatischen Kohlenwasserstoffe. Vorteilhaft wird Cyclohexan als Lösungsmittel verwendet.

Als Lösungsmittelkomponenten sind ferner Ether wie Tetrahydrofuran oder Diethylether sowie tertiäre Amine wie z.B. Tetramethylethylendiamin oder Pyridin in Konzentrationen von 0,01 bis 20, vorzugsweise 0,01 bis 2 Gew.-% geeignet. Bevorzugt ist Tetrahydrofuran.

Alle Einsatzstoffe müssen von sauerstoff- und protonenaktiven Verunreinigungen befreit werden, was z.B. durch Kontaktieren mit Metallorganylen oder durch adsorptive Reinigung, z.B. an Aluminiumoxid erfolgen kann. Die Durchführung der Polymerisation erfolgt unter Inertgasbedingungen bei Temperaturen von -20 bis +130°C, vorzugsweise bei 25 bis 80°C. Es wird bei Drucken gearbeitet, bei denen die Monomeren und Lösungsmittel bei der Polymerisationstemperatur nicht verdampfen. Nach beendeter Polymerisation wird das Polymerisationsgemisch mit einer ausreichenden Menge Wasser, Methanol oder Isopropanol versetzt, um die aktiven Endgruppen bzw. überschüssigen Initiator zu desaktivieren.

Im allgemeinen wird so vorgegangen, daß in einer ersten Polymerisationsstufe der vinylaromatische Kohlenwasserstoff zur Bildung des A- oder A'-Blocks vollständig auspolymerisiert wird, im zweiten Polymerisationsschritt der Dienkohlenwasserstoff zur Bildung des B-Blocks vollständig umgesetzt wird, und in der dritten Stufe die zweite Teilmenge des vinylaromatischen Kohlenwasserstoffs zur Bildung A'- bzw. A-Blocks aufpolymerisiert wird. Dabei entstehen scharfe Übergänge zwischen den einzelnen Blöcken.

Die erfindungsgemäßen Formmassen weisen besonders vorteilhafte Eigenschaften auf, wenn bei der Herstellung des Blockcopolymeren b in der ersten Polymerisationsstufe die kleinere Menge des vinylaromatischen Monomeren zur Bildung des A-Blocks und im dritten Schritt die größere Menge dieses Monomeren zur Bildung des A'-Blocks eingesetzt wird.

Die so erhaltenen Blockcopolymeren b mit unsymmetrischem Aufbau werden nach üblichem Verfahren durch Hydrierbehandlung in Polymere übergeführt, in denen die aliphatischen ungesättigten Bindungen teilweise abgesättigt sind, d.h. die einen Hydrierungsgrad von 50 bis 95 Gew.-% aufweisen. In den erfindungsgemäßen Formmassen werden Blockcopolymere b eingesetzt, in denen im Block B nur noch 10 bis 20 Gew.-% der ursprünglich vorliegenden Doppelbindungen vorhanden sind.

Die Hydrierung wird vorzugsweise mit molekularem Wasserstoff und Katalysatoren auf Basis von Metallen oder Metallsalzen der achten Gruppe des Periodensystems durchgeführt. Sie kann in heterogener Phase z.B. mit Raney-Nickel oder bevorzugt in homogener Phase mit Katalysatoren auf Basis von Salzen, insbesondere Carboxylaten, Alkoxiden oder Enolaten des Kobalts, Nickels oder Eisens, die mit Metallalkylen, insbesondere mit Aluminiumalkylen, kombiniert sind, erfolgen. Verfahren zur selektiven Hydrierung von Blockcopolymeren werden u.a. in den US-Patentschriften 3 113 986 und 4 226 952 beschrieben.

Das Polymerisationsgemisch kann zur Isolierung des Polymeren nach bekannten Verfahren wahlweise direkt zur Trockne erhitzt oder mit Wasserdampf behandelt werden, wobei das Lösungsmittel abdestilliert wird. Es kann gleichfalls in einem überschuß Nichtlösungsmittel wie z.B. Ethanol gefällt und mechanisch abgetrennt und getrocknet oder durch Extruderentgasung aufgearbeitet werden.

Bei der Charakterisierung der Blockcopolymeren b werden die folgenden Methoden verwendet:

Die mittleren Molekulargewichte M (Zahlenmittel $M_n$) werden durch Gelpermeationschromatographie anhand von Eichkurven für Polystyrol (Eichsubstanzen mit sehr enger Molekulargewichtsverteilung: $M_w/M_n$ ca. 1) bei 23°C in 0,125 gew.-%iger Tetrahydrofuranlösung bei einer Durchflußgeschwindigkeit von 1,5 ml/min [vgl. G. Glöckner, "Polymercharakterisierung durch Flüssigkeitschromatographie", Verlag A. Hütig, Heidelberg, 1982] gemessen.

Der Restdoppelbindungsgehalt der olefinisch ungesättigten Bindungen wird durch Fourier-Analyse der Infrarotspektren ermittelt.

Komponente c

Von der Komponente c werden in den erfindungsgemäßen Formmassen 0 bis 70, vorzugsweise 20 bis 60, insbesondere 33 bis 50 Gew.-Teile, bezogen auf die Summe von a) bis d), eingesetzt.

Als Komponente c werden sowohl Homo- und -Copolymerisate als auch schlagzäh modifizierte Polymerisate von vinylaromatischen Verbindungen eingesetzt.

Als vinylaromatische Verbindungen kommen dabei insbesondere Styrol in Betracht, ferner die kern- oder seitenkettenalkylierten Styrole. Vorzugsweise wird jedoch Styrol allein verwendet.

Die Homopolymerisate werden dabei nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980). Die Homopolymerisate können Gewichtsmittel des Molekulargewichts $M_w$ von 1000 bis 300 000 aufweisen, die nach üblichen Methoden bestimmt werden können.

4

Als Comonomere zur Herstellung von Copolymerisaten kommen z.B. (Meth)acrylsäure, (Meth)-acrylsäurealkylester mit 1 bis 4 C-Atomen im Alkylrest, Acrylnitril und Maleinsäureanhydrid sowie Maleinsäureimide in Betracht. die Comonomeren sind je nach ihrer chemischen Struktur in unterschiedlichen Mengen in den Styrolpolymerisat enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in den US-Patentschriften 4 360 618 und 4 405 753 und in der Veröffentlichung von J. R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Encyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes ($M_w$) von 10 000 bis 300 000, die nach üblichen Methoden bestimmt werden können.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16-34 (1963), unter -20°C besitzen. Es können aber auch Acrylatkautschuke, EPDM-, Polybutylen- und Polyoctenamerkautschuke eingesetzt werden.

Die schlagzähmodifizierten Styrolpolymerisate besitzen einen Weichkomponentenanteil von 3 bis 30, vorzugsweise von 4 bis 14 Gew.-%.

Komponente d

Die Mischungen aus Polyphenylenether und den hydrierten Copolymerisaten, die gegebenenfalls auch Polyvinylaromaten enthalten, können darüber hinaus auch Hilfs- und Zusatzstoffe wie feuerhemmende Mittel aus der Gruppe der aromatischen Phosphate, Phosphite und Phosphinoxide, Verstärkungsmittel wie Glasfasern, organische und mineralische Hilfsstoffe sowie Stabilisatoren, Verarbeitungshilfsmittel wie Polyethylenwachs oder auch Farbstoffe und die sonst bisher für die Formmassen bekannt gewordenen Zusatzstoffe sowie weitere Polymere, wie Polyamide, Polyetherimide, Polyacrylate, Polyolefine und alle anderen mit Polyphenylenethern als verträglich bekannt gewordenen Polymerisate enthalten. Die Formmassen enthalten darüber hinaus gegebenenfalls Füllstoffe wie Glasfasern, mineralische Füllstoffe, Tone, Metallflocken, Plastifizier- und Verarbeitungshilfsmittel sowie Stabilisatoren und Antistatika.

Komponente d ist in den erfindungsgemäßen Formmassen in Mengen zwischen 0 und 40 Gew.-Teilen, bezogen auf die Summe von a) bis d), enthalten.

Weitere Beschreibung der Formmassen

Die Herstellung der erfindungsgemäßen thermoplastischen Formmassen erfolgt zweckmäßigerweise durch Mischen der Komponenten bei Temperaturen im Bereich von 250 bis 320°C bei einer mittleren Verweilzeit von 0,5 bis 30, bevorzugt 1 bis 5 min in üblichen Mischvorrichtungen, wie z.B. Knetern und Einschneckenextrudern, vorzugsweise in Zweischneckenextrudern. Um eine möglichst homogene Formmasse zu erhalten, ist eine intensive Durchmischung notwendig. Die Reihenfolge des Mischens der Komponenten kann variiert werden, es können zwei oder mehr Komponenten z.B. in einem Fluidmischer vorgemischt werden oder es können auch alle Komponenten gemeinsam in einer Stufe gemischt werden.

Die erfindungsgemäßen Formmassen sind leicht fließend und daher gut verarbeitbar und weisen gleichzeitig ein hohes mechanisches Eigenschaftsniveau auf, was sich unter anderem in einer hohen Schlagzähigkeit und Durchstoßarbeit äußert. Dies ist umso überraschender, da die erfindungsgemäßen Formmassen, die ein Blockcopolymer mit einem hohen Gehalt an vinylaromatischen Verbindungen von mehr als 35 Gew.-% enthalten, nach bisherigen Annahmen eine geringere Zähigkeit besitzen sollten als die Formmassen der DE-B 24 34 848, die kautschukartige Blockcopolymere mit weniger als 33 Gew.-% Vinylaromaten enthalten.

Ein weiterer Vorteil der erfindungsgemäßen Formmassen liegt darin, daß ihre Wärmestabilität hoch ist, d.h. die guten mechanischen Eigenschaften fallen nach längerer Wärmelagerung nur geringfügig ab. Auch bei Einarbeitung von Flammschutzmitteln bleiben die vorteilhaften Eigenschaften erhalten.

Aus den erfindungsgemäßen thermoplastischen Formmassen lassen sich in vorteilhafter Weise durch Spritzgießen oder Extrusion Formkörper mit günstigen Eigenschaften, insbesondere guter Schlagzähigkeit und hoher Wärmestabilität herstellen.

Beispiele 1 bis 9 und Vergleichsversuche 1* bis 6*

Komponente a:

Poly(2,6-dimethyl-1,4-phenylen)ether mit einer Viskositätszahl von 0,6 dl/g (gemessen in Chloroform bei 30°C nach DIN 53 726), hergestellt gemäß den Beispielen der DE-A 30 35 599 bzw. EP-A 81 708.

Komponente b:

Die in Tabelle 2 angegebenen Blockcopolymeren b wurden entsprechend der folgenden allgemeinen Arbeitsvorschrift hergestellt:

In einem thermostatisierbaren Rührkessel werden unter Reinstickstoff 7000 g gereinigtes, wasserfreies Cyclohexan, 35 g Tetrahydrofuran und monomeres Styrol zur Bildung des A-Blocks (Mengen gemäß Tabelle 1) vorgelegt. Nach dem Austitrieren der noch vorhandenen protonenaktiven Verunreinigungen mit sek.-Butyllithium, wird die in Tabelle 1 angegebene Menge Initiator sek.-Butyllithium (1,4 molare Lösung in Cyclohexan/Isopentan) zugesetzt.

Die Temperaturen der Polymerisation werden zwischen 45 und 65°C etwa 1 h gehalten, um den ersten Block aus Polystyrollithium zu bilden.

Sodann wird in den Rührkessel gereinigtes monomeres 1,3-Butadien (gemäß Tabelle 1) eingespeist und bei Temperaturen zwischen 50 und 67°C bis zur vollständigen Umsetzung unter Bildung von Ketten aus zwei Segmenten Polystyrol-Polybutadienyllithium polymerisiert. Die Polymerisation ist nach 1 h vollständig. Im Anschluß erfolgt die Zugabe von weiterem Styrol (gemäß Tabelle 1) zur Bildung des dritten Blocks A', dessen Polymerisation bei 60 bis 70°C nach etwa 1 h vollständig ist. Danach wird 15 ml Isopropanol zugesetzt, um den Abbruch der lebenden Polymerketten sicherzustellen.

Nach jeder Polymerisationsstufe wird dem Reaktionsgefäß eine Probemenge für analytische Zwecke entnommen.

Die selektive Hydrierung der Blockcopolymeren erfolgt durch Zugabe einer Katalysatorlösung aus 1,4 g Nickel (II) acetylacetonat in 80 g Toluol, versetzt mit 30 ml einer 20 gew.%igen Lösung von Aluminiumtriisobutyl in Hexan und einem Wasserstoffdruck von 15 bar bei 80°C Hydriertemperatur. Die fortschreitende Hydrierreaktion kann dabei über die Wasserstoffaufnahme (Druckabfall im Reaktor) verfolgt werden.

So wird unter den gewählten Bedingungen nach 2 1/2 h Hydrierzeit (= $b_1$), nach 4 h Hydrierzeit (= $b_2$) und nach 6 h Hydrierzeit (= $b_3$) ein Restdoppelbindungsgehalt von 17 % (= $b_1$) 14 % (= $b_2$) und 11 % (= $b_3$) der ursprünglich vorhandenen olefinischen Ungesättigtheit erreicht.

Die Aufarbeitung der Blockcopolymeren erfolgt durch Entfernen des Lösungsmittels durch Extruderentgasung.

Tabelle 1: eingesetzte Mengen

| | Styrol (A-Block) (g) | 1,3 Butadien (B-Block) (g) | Styrol (A'Block) (g) | sek.-Butyllithium (mmol) |
|---|---|---|---|---|
| $b_1$ | 154 | 1875 | 971 | 44 |
| $b_2$ | 170 | 1920 | 910 | 45 |
| $b_3$ | 154 | 1860 | 986 | 43 |

Tabelle 2:    Komponente b

| | mittleres Molekulargewicht M [g/mol] von A | $\frac{M(A')}{M(A)}$ | Anteil von A+A' an A-B-A' [Gew.-%] |
|---|---|---|---|
| b1 | 3 500 | 6,3 | 37 |
| b2 | 3 800 | 5,3 | 36 |
| b3 | 3 600 | 6,4 | 38 |

Zu Vergleichszwecken wurden die in Tabelle 3 angegebenen nicht erfindungsgemäßen Blockcopolymere V1 bis V3 eingesetzt.

Tabelle 3:    nicht erfindungsgemäße Blockcopolymere

| | Struktur[1] | mittleres Molekulargewicht M[g/mol] von A | $\frac{M(A')}{M(A)}$ | Anteil von A+A' [Gew.-%] |
|---|---|---|---|---|
| V1 | A-B | 26 000 | - | 29 |
| V2[2] | A-B-A | 10 500 | 1 | 30 |
| V3 | A-B-A' | 9 000 | 1,7 | 32 |

1) A,A': Styrolblock, B: Block aus teilhydriertem Polybutadien
2) gemäß DE-B 24 34 848

1) A,A': Styrolblock, B: Block aus teilhydriertem Polybutadien
2) gemäß DE-B 24 34 848

In Tabelle 4 sind die Restdoppelbindungsgehalte der verwendeten Blockcopolymeren aufgeführt.

Tabelle 4:

| | Restdoppel-<br>bindungsgehalt<br>[Gew.-%] |
|---|---|
| b1 | 17 |
| b2 | 14 |
| b3 | 11 |
| | |
| V1 | 2 |
| V2 | 3 |
| V3 | 2 |

Komponente c:

c1: Polystyrol mit einem Molekulargewicht von 150 000 g/mol (viskosimetrische Messung in Toluol bei 25°C), hergestellt gemäß S.R. Sundler, W. Karo, Polymer Syn. org. Chem. Vol. 29/I, Academic Press, N.Y., 1974, S. 3
c2: Schlagfestes Polystyrol mit einem Polybutadienanteil von 9 Gew.-%, hergestellt gemäß DE-A 30 35 648.
c3: Schlagfestes Polystyrol mit einem Polybutadienanteil von 8 Gew.-%, hergestellt gemäß DE-A 30 35 648.

Komponente d:

d1: Triphenylphosphinoxid
d2: Ethylen-buten-1-copolymerisat mit einem Buten-1-Anteil von 8 Gew.-%, einer Dichte von 0,919 g/cm$^3$ und einem Meltindex bei 190°C und 21,6 kg Belastung von 1 g/10 Min.
d3: Trisnonylphenylphosphit
d4: Feinteiliger mineralischer Ton (Kaolin Supreme der Firma Bassermann, München, mit einem mittleren Teilchendurchmesser ($d_{50}$) von 0,4 $\mu$m und einer spezifischen Oberfläche (nach BET) von 14 m$^2$).

Die in der Tabelle 5 angegebenen Gewichtsteile der Komponenten a, b, c und der Zusatzstoffe d wurden miteinander in einem Fluidmischer vermischt und auf einem Zweischneckenextruder bei 280°C im Verlaufe von 3 Min. aufgeschmolzen und homogenisiert. Anschließend wurde granuliert. und homogenisiert. Anschließend wurde granuliert.

Tabelle 5:  Formmassen

| Bsp. | Vergleichs-versuch | a | b | c | d |
|---|---|---|---|---|---|
| 1 | | 4,0 | 1,0 (b1) | 4,8 (c2) | 0,1 (d2) |
| | | | | | 0,1 (d3) |
| 2 | | 4,0 | 1,0 (b2) | 4,8 (c2) | 0,1 (d2) |
| | | | | | 0,1 (d3) |
| 3 | | 4,0 | 1,0 (b3) | 4,8 (c2) | 0,1 (d2) |
| | | | | | 0,1 (d3) |
| 4 | | 4,5 | 0,9 (b1) | 4,0 (c3) | 0,5 (d1) |
| | | | | | 0,1 (d2) |
| 5 | | 4,5 | 0,9 (b2) | 4,0 (c3) | 0,5 (d1) |
| | | | | | 0,1 (d2) |
| 6 | | 5,7 | 1,0 (b1) | | 1,0 (d1) |
| | | | | | 2,3 (d4) |
| 7 | | 5,7 | 1,0 (b2) | | 1,0 (d1) |
| | | | | | 2,3 (d4) |
| 8 | | 5,0 | 1,2 (b1) | 3,6 (c1) | 0,1 (d2) |
| | | | | | 0,1 (d3) |
| 9 | | 5,0 | 1,2 (b2) | 3,6 (c1) | 0,1 (d2) |
| | | | | | 0,1 (d3) |
| | 1* | 4,0 | 1,0 (V1) | 4,8 (c2) | 0,1 (d2) |
| | | | | | 0,1 (d3) |
| | 2* | 4,0 | 1,0 (V2) | 4,8 (c2) | 0,1 (d2) |
| | | | | | 0,1 (d3) |
| | 3* | 4,0 | 1,0 (V3) | 4,8 (c2) | 0,1 (d2) |
| | | | | | 0,1 (d3) |
| | 4* | 4,5 | 0,9 (V3) | 4,0 (c1) | 0,5 (d1) |
| | | | | | 0,1 (d2) |
| | 5* | 5,7 | 1,0 (V3) | | 1,0 (d1) |
| | | | | | 2,3 (d4) |
| | 6* | 5,0 | 1,2 (V3) | 3,6 (c1) | 0,1 (d2) |
| | | | | | 0,1 (d3) |

Die Prüfung der Formmassen erfolgte an bei 280°C spritzgegossenen Prüflingen. Es wurden die Durchstoßarbeit nach DIN 53 443, Blatt 2, bei 23°C und -40°C sowie die Kerbschlagzähigkeit nach DIN 53 453 bei 23°C und -20°C gemessen. Zur Ermittlung der Wärmebeständigkeit wurden die Prüfkörper der thermischen Alterung bei 90°C im Luftumwälzofen unterworfen. Nach den in Tabelle 5 angegebenen Zeitintervallen wurde die Kerbschlagzähigkeit nach DIN 53 453 bei 23°C und -20°C bestimmt. Die Fließfähigkeit wurde anhand des Schmelzindexes nach DIN 53 735 ermittelt. Die Ergebnisse der Prüfung zeigt Tabelle 6.

Tabelle 6: Eigenschaften

| Beispiel Vergleichs-versuche | Schmelz-index (21,6 kg, 250°C) [g/10min] | Durchstoßarbeit [Nm] | | Kerbschlagzähigkeit [kJ/m²] nach Lagerung bei 90°C | | | | | |
|---|---|---|---|---|---|---|---|---|---|
| | | | | sofort | | 15 Wochen | | 30 Wochen | |
| | | 23°C | -40°C | 23°C | -20°C | 23°C | -20°C | 23°C | -20°C |
| 1 | 40 | 50 | 35 | 24 | 16 | 21 | 13 | 18 | 11 |
| 2 | 42 | 45 | 31 | 26 | 15 | 22 | 14 | 16 | 10 |
| 3 | 45 | 40 | 25 | 25 | 14 | 18 | 11 | 14 | 8 |
| 4 | 81 | 48 | 17 | 18 | 12 | 17 | 10 | 13 | 7 |
| 5 | 78 | 45 | 18 | 19 | 11 | 15 | 9 | 12 | 6 |
| 6 | 7 | 40 | 25 | 12 | 7 | 11 | 6 | 10 | 4 |
| 7 | 8 | 38 | 23 | 11 | 6 | 10 | 7 | 9 | 5 |
| 8 | 80 | 48 | 30 | 16 | 11 | 14 | 10 | 11 | 8 |
| 9 | 88 | 45 | 28 | 18 | 10 | 17 | 8 | 12 | 7 |
| 1* | 38 | 28 | 5 | 22 | 7 | 14 | 5 | 8 | 2 |
| 2* | 30 | 45 | 20 | 21 | 12 | 15 | 9 | 12 | 7 |
| 3* | 32 | 48 | 21 | 22 | 10 | 13 | 10 | 11 | 7 |
| 4* | 65 | 42 | 13 | 14 | 10 | 10 | 8 | 10 | 3 |
| 5* | 5 | 30 | 18 | 9 | 6 | 6 | 4 | 4 | 2 |
| 6* | 63 | 40 | 22 | 14 | 8 | 10 | 6 | 7 | 2 |

**Patentansprüche**

1. Thermoplastische Formmassen, enthaltend
   a) 20 bis 80 Gew.-Teile eines Polyphenylenethers,

EP 0 292 714 B1

b) 1 bis 20 Gew.-Teile eines Blockcopolymeren der allgemeinen Formel A-B-A' aus zwei polyvinylaromatischen Blöcken A und A' und einem teilhydrierten Kautschukblock B,
c) 0 bis 70 Gew.-Teile eines Polyvinylaromaten und
d) 0 bis 40 Gew.-Teile üblicher Zusätze,
wobei die Summe aus a) bis d) 100 Gew.-Teile ergibt, dadurch gekennzeichnet, daß
- die mittleren Molekulargewichte von A und A' sich um den Faktor 2 bis 20 unterscheiden,
- der kürzere Block A ein mittleres Molekulargewicht von 2000 bis 4000 aufweist und
- die Blöcke A und A' gemeinsam 35 bis 50 Gew.-% von b) ausmachen.
- im Block B des Blockcopolymerisates b 10 bis 20 Gew.-% der ursprünglich vorliegenden Doppelbindungen vorhanden sind.

2. Thermoplastische Formmassen nach Anspruch 1, dadurch gekennzeichnet, daß die Blöcke A und A' gemeinsam 35 bis 40 Gew.-% des Blockcopolymeren b) ausmachen,

3. Thermoplastische Formmassen nach den Ansprüchen 1 und 2, dadurch gekennzeichnet, daß die mittleren Molekulargewichte von A und A' sich um den Faktor 4 bis 8 unterscheiden.

4. Thermoplastische Formmassen nach den Ansprüchen 1 bis 3, dadurch gekennzeichnet, daß A ein mittleres Molekulargewicht von 3000 bis 3800 hat.

5. Verfahren zur Herstellung von thermoplastischen Formmassen gemäß den Ansprüchen 1 bis 4 durch Mischen bei einer Temperatur von 250 bis 320 °C im Verlaufe von 0,5 bis 30 Minuten.

6. Verwendung von Formmassen gemäß den Ansprüchen 1 bis 4 zur Herstellung von schlagzähen Formkörpern.

## Claims

1. A thermoplastic molding material containing
a) from 20 to 80 parts by weight of a polyphenylene ether,
b) from 1 to 20 parts by weight of a block copolymer of the formula A-B-A' consisting of two polyvinylaromatic blocks A and A' and a partially hydrogenated rubber block B,
c) from 0 to 70 parts by weight of a polyvinylaromatic and
d) from 0 to 40 parts by weight of conventional additives, the sum of a) to d) being 100 parts by weight, wherein
- the mean molecular weights of A and A' differ by a factor of from 2 to 20,
- the shorter block A has a mean molecular weight of from 2,000 to 4,000
- the blocks A and A' together account for from 35 to 50% by weight of b) and
- in block B of the block copolymer b from 10 to 20% by weight of the double bonds originally present are still present.

2. A thermoplastic molding material as claimed in claim 1, wherein the blocks A and A' together account for from 35 to 40% by weight of the block copolymer b).

3. A thermoplastic molding material as claimed in claim 1 or 2, wherein the mean molecular weights of A and A' differ by a factor of from 4 to 8.

4. A thermoplastic molding material as claimed in any of claims 1 to 3, wherein A has a mean molecular weight of from 3,000 to 3,800.

5. A process for the preparation of a thermoplastic molding material as claimed in any of claims 1 to 4, by mixing at from 250 to 320 °C in the course of from 0.5 to 30 minutes.

6. The use of a molding material as claimed in any of claims 1 to 4, for producing impact-resistant moldings.

**Revendications**

1. Matières à mouler thermoplastiques, qui contiennent
   a) 20 à 80 parties en poids d'un poly(éther phénylénique),
   b) 1 à 20% en poids d'un copolymère à blocs de la formule générale A-B-A', constitué de deux blocs polyvinylaromatiques A et A' et d'un bloc de caoutchouc partiellement hydrogéné B,
   c) 0 à 70 parties en poids d'un composé polyvinylaromatique et
   d) 0 à 40 parties en poids d'addtifs usuels,
   où la somme de a) à d) est égale à 100 parties, en poids, caractérisées en ce que
   - les poids moléculaires moyens de A et de A' se différencient d'un facteur de 2 à 20,
   - le bloc A plus court présente un poids moléculaire moyen de 2000 à 4000 et
   - les blocs A et A' constituent ensemble 35 à 50% en poids de b),
   - 10 à 20% en poids des doubles liaisons existant à l'origine sont présents dans le bloc B du copolymère à blocs b).

2. Matières à mouler thermoplastiques suivant la revendication 1, caractérisées en ce que les blocs A et A' constituent ensemble 35 à 40% en poids du copolymère à blocs b).

3. Matières à mouler thermoplastiques suivant les revendications 1 et 2, caractérisées en ce que les poids moléculaires moyens de A et A' se différencient d'un facteur de 4 à 8.

4. Matières à mouler thermoplastiques selon les revendications 1 à 3, caractérisées en ce que A possède un poids moléculaire moyen de 3000 à 3800.

5. Procédé de fabrication de matières à mouler thermoplastiques selon les revendications 1 à 4, par mélange à une température de 250 à 320°C pendant 0,5 à 30 minutes.

6. Utilisation de matières à mouler selon les revendications 1 à 4, en vue de la fabrication d'articles ou corps moulés qui résistent au choc.